# NEW EUROPEAN PATENT SPECIFICATION

(11) **EP 0 290 416 B2**
(45) Date of publication and mention of the opposition decision: **16.03.2005**
(45) Mention of the grant of the patent: 23.06.1993
(21) Application number: 88870068.9
(22) Date of filing: 26.04.1988
(51) Int. Cl.: A01N 25/30, A01N 25/02

(54) **Improved glyphosate formulations**
Formulierungen von Glyphosat
Formulations de glyphosate

(30) Priority: 29.04.1987 GB 8710164; 04.09.1987 GB 8720819
(43) Date of publication of application: 09.11.1988
(73) Proprietor: MONSANTO EUROPE S.A., B-1150 Brussels (BE)
(72) Inventor: Forbes, James Carnegie, Chesterfield Missouri 63017 (US); Hewitt, Samuel, B-1900 Overijse (BE); Henriet, Michel Maurice, B-5861 Cortil-Noirmont (BE); Mitchell, Robert William, B-1900 Overijse (BE)
(74) Representative: Bosch, Henry

(56) References cited:
- PL-A- 131 437
- US-A- 3 799 758
- US-A- 4 528 023
- CHEMICAL ABSTRACTS, vol. 102, no. 15, 15th April 1985, page 215, abstract no. 127180p, Columbus, Ohio, US; L.S. MORROW: "Effect of rate of glyphosphate with and without frigate surfactant on weed control in orbit spring oats"
- CHEMICAL ABSTRACTS, vol. 110, no. 15, 10th April 1989, page 271, abstract no. 130514w, Columbus, Ohio, US;
- WEED RESEARCH, vol. 20, 1980, pages 139-146, European Weed Research Society, Oxford, GB; D.J. TURNER et al.: "Effect of ammonium sulphate and other additives upon the phytotoxicity of glyphosate to Agropyron repens (L.) Beauv"
- 1985 BRITISH CROP PROTECTION COUNCIL MONOGRAM NO. 28, SYMPOSIUM ON APPLICATION AND BIOLOGY, 1985, pages 135-144; D.J. TURNER et al.: "Studies with alternative glyphosate formulations"
- Van Valkenberg in Adjuvants For Herbicides (1982), pages 1-9
- McCutcheons Emulsifiers & Detergents, 1982 International Edition, pages 81, 87, 261 and 266 to 283
- The Pesticide Manual, Ninth Edition, British Crop Protection Council, pages 459-460
- Turner and Tabbush 1985 BCPC Monogram No 28, pages 135-145
- Advanced Organic Chemistry, Fieser and Fieser, Reinhold Publishing Corporation, 1961, pages 982-985, 990
- The Herbicide Glyphosate, Butterworths, 1985; in particular, DJ Turner, Chapter 15 EFFECTS ON GLYPHOSATE PERFORMANCE OF FORMULATION, ADDITIVES AND MIXING WITH OTHER HERBICIDES, pages 221-240
- Turner DJ (1981). The effects of additives on the control of Agropyron repens with glyphosate, PROCEEDINGS OF THE CONFERENCE ON GRASS WEEDS IN CEREALS IN THE U.K, READING, 1981 pp 167-175

## Description

This invention relates to improved glyphosate formulations.

Glyphosate (N-phosphonomethylglycine) is well known as a foliage-acting herbicide. In the free acid form, glyphosate has low water-solubility, and because of this, commercial formulations contain a water-soluble salt of glyphosate. For example, in Roundup® herbicide, glyphosate is present as the monoisopropylamine salt.

Several studies on the effect of surfactants on the herbicidal activity of the monoisopropylamine salt of glyphosate are reported in the literature. For example, Turner and Loader, Weed Research, 1980, Vol 20, 139-146 reported that fatty amine ethoxylates having a hydrophile-lipophile balance of 17, are generally the most effective in increasing the herbicidal activity of solutions of Roundup® herbicide. In the same publication, the authors state that with spray solutions containing ammonium sulphate, responses to surfactants were different, with lipophilic surfactants, for example fatty amine ethoxylates having a hydrophile-lipophile balance of 6, usually having greater effects.

In 1985 BCPC Monogram No. 28 Symposium on Application and Biology "Studies with Alternative Glyphosate Formulations", Turner and Tabbush describe the results of some trials with glyphosate acid formulated as a foliage spray. In summarising the results, they state that glyphosate acid had relatively little activity unless surfactants and/or ammonium sulphate was added, but that when this was done, its phytotoxicity was equivalent to that of Roundup® herbicide. There is an observation that glyphosate acid is much more soluble in a solution of a tertiary amine from tallow containing 15 mols of ethylene oxide per mol of amine than in pure water.

US-A-4 612 034 describes herbicidal formulations comprising mixtures of the isopropylamine salt of glyphosate and a potentiating amount of a specified class of thiocyanates including ammonium thiocyanate.

In the experiments described in 1985 BCPC Monogram No. 28 on the preparation of salts of glyphosate or the solubilisation of glyphosate acid with ethoxylated fatty acid amines, the ethoxylated fatty acid amine surfactant was used in an excess of at least five parts by weight per part by weight of glyphosate acid. While one experiment described in Weed Research, 1980, Vol 20, 139-146, uses a solution containing less surfactant than glyphosate (as Roundup® herbicide, which itself contains a significant amount of surfactant) it was applied by a controlled drop technique at 20 l/ha. For experiments in which solutions were sprayed by conventional techniques at normal farm application rates of about 200 l/ha, however, the solutions contained about twice as much surfactant as glyphosate.

In the investigations leading to the present invention, we worked at conventional spray rates, and with solutions containing lower surfactant to glyphosate ratios than those disclosed in the prior art for solutions sprayed at those rates. We have found that with our solutions, better results are obtained under most conditions with the lipophilic fatty amine ethoxylates than with the more hydrophilic fatty amine ethoxylates hitherto thought to be optimum. This is so, whether or not the solution also contains ammonium sulphate. These observations are suprising in view of the prior art which suggests that the lipophilic surfactants would not be the surfactants of choice except in the presence of ammonium sulphate.

The present invention provides commercially attractive glyphosate compositions particularly adapted for use in conjunction with agriculturally-acceptable inorganic ammonium salts such as ammonium sulphate for spraying at conventional volume rates. A feature of the present invention is that the amount of alkoxylated amine surfactant relative to total glyphosate can be reduced significantly below the ratio disclosed in the prior art for conventional spray solutions, while maintaining the herbicidal activity per unit of glyphosate. Alternatively, the unit activity can be enhanced at a ratio of surfactant to glyphosate similar to that of the prior art.

In one aspect, a composition of the invention is a concentrate comprising an aqueous solution containing
(a) solubilised glyphosate equivalent to at least 40 grams per litre of glyphosate acid; and
(b) a surfactant which is (i) an amine having the formula 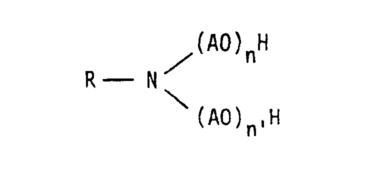
where A represents an alkylene group, n and n'. being integers such that in individual amines n + n' has a value from 0 to 15, but in the mixture the average of the sum n + n' is from 2 to 10, R represents a straight- or branched-chain alkyl or alkenyl group, having as single value or an average, value, of from 10 to 20 carbon atoms
and wherein the weight ratio of the solubilised glyphosate (a) (expressed as glyphosate acid equivalent) to the surfactant (b) is from 1.5:1 to 3:1,
with the proviso that the solution contains no significant amount of inorganic ammonium sail and no additional secondary surfactants."

A further aspect of the invention is a spray solution intended for spraying at conventional volume rates and containing solubilised glyphosate and surfactant as defined above in a weight ratio of glyphosate (expressed as glyphosate acid equivalent) to surfactant of from 1.5:1 to 3:1. A herbicidal method comprises spraying weeds with the said spray solution at 100-400 litres per hectare, the concentration of (a) in the spray solution being such that the application rate of glyphosate acid equivalent is from 0.125 to 1.5 kg per hectare.

In the compositions of the invention, the glyphosate is solubilised by the presence in the solution of one or more agriculturally-acceptable cations. Such cations include the cationic forms of the alkoxylated amine surfactants, alkali metal cations, for instance sodium and potassium, and ammonium and substituted ammonium cations. The latter include cations derived from primary or secondary amines such as isopropylamine or dimethylamine and from diamines such as ethylenediamine. Other examples of agriculturally acceptable salts of glyphosate are aminoguanidine salts and trialkylsulphonium salts, for example the trimethylsulphonium salt, as disclosed respectively in EP-A-0 088 180 and US-A-4 405 531.

Formulations containing (a) and (b) in ratios towards the lower (1:1.75) end of the range stated above can be prepared from low molecular weight surfactants by the solubilisation of glyphosate acid with the surfactant alone. In most embodiments however, the upper limitation on the amount of surfactant requires the solution to contain other agriculturally acceptable cations in addition to the surfactant cations. In these embodiments, the solubilised glyphosate can be derived (i) partly from glyphosate acid solubilised by means of the surfactant and partly from a salt of glyphosate with another agriculturally-acceptable cation, or (ii) wholly from a salt of glyphosate with such another agriculturally-acceptable cation.

Concentrates of the invention may contain from 150-450 g/l or even more, of glyphosate acid equivalent at ambient temperatures, depending on the water-solubility of the glyphosate salt. For example, when the glyphosate salt is the monoisopropylamine salt, solutions containing 250-400 g/l of glyphosate acid equivalent are easily prepared. Mono-ammonium glyphosate shows similar solubility characteristics but certain alkali metal salts, for example the potassium salt are somewhat less soluble. In such cases, the maximum concentration of soluble glyphosate obtainable, expressed as glyphosate acid equivalent, is perhaps 250-300 g/l.

In general, on economic grounds, concentrates of the invention containing a minimum of water, i.e. solutions that are substantially saturated, are preferred. Depending on the climatic conditions to which the solutions are likely to be subjected between manufacture and use, they can be made so that they are saturated at, for example, -5°C, 0°C or +10°C. Normally a safety margin will be provided, so that a solution which would not be expected to experience temperatures below 10°C, for instance, would nevertheless be stable (i.e. not deposit solids) at, for instance, 5°C. In addition, the concentrates of the invention can contain conventional anti-freeze additives such as ethylene glycol, polyethylene glycols or glycerol.

In the compositions of the invention, the weight ratio of total glyphosate (expressed as glyphosate acid equivalent) to surfactant is from 1.5:1 to 3:1. The maximum amount of surfactant is determined mainly by economic considerations. Higher levels of surfactant may increase the unit herbicidal effect of the glyphosate, but these are not cost-effective beyond a certain level. When the concentrates are viewed as precursors of spray solutions which also contain an agriculturally acceptable inorganic ammonium salt, there is little advantage in using more surfactant than 1.5 parts per part by weight of glyphosate acid equivalent. At the other end of the range, the maximum preferred glyphosate : surfactant weight ratio is 3:1, for example from 1.5:1 to 2.5:1, although the limits can vary depending on the particular surfactant used.

Commercially available amine surfactants within the above formula are often mixtures rather than single compounds. They include alkoxylated derivatives of "cocoamine" in which the groups R correspond to alkyl groups derived from myristic, lauric, palmitic and stearic acids. The average number of carbon atoms in R in cocoamine is 12-14. Other examples are alkoxylated derivatives of "oleylamine", where the principal carbon chain of R corresponds to that of oleic acid (18 carbon atoms), with small amounts of shorter and longer chains, of stearylamine (18 carbon atoms), and of "tallow amine". In tallow amine, R is mainly a mixture of hexadecyl and octadecyl. The commercial surfactants are also usually mixtures of molecules having various values of n + n', and surfactants having a low average value of n + n' may contain a proportion of non-alkoxylated or mono-alkoxylated amines. The preferred alkoxylated derivatives are the ethoxylated derivatives.

In general, lower molecular weight surfactants are preferred to higher molecular weight surfactants, because a given weight of the former provides a higher molecular concentration of surfactant than the same weight of the latter. The most preferred surfactants are those where A represents an ethylene group, and those where the number or average number of carbon atoms in the group or groups R is from 10 to 20. Specific examples of preferred surfactants are ethoxylated derivatives of cocoamine, tallow amine and oleylamine where in each case n + n' has an average value of 2, 5 or 8.

For the preparation of concentrates of the invention where the cationic form of the surfactant is at least partially responsible for the solubility of the glyphosate, a solution of solubilised glyphosate acid can in many instances be made simply by mixing the acid and the alkoxylated amine surfactant in an aqueous medium at room temperature or slightly above. A clear solution is obtained within a few minutes. The amount of surfactant required to solubilise the glyphosate acid is normally about 1:1 molar equivalent amount. However, slightly less, for example 90% of the molar equivalent amount, may be sufficent in certain instances, while in others it may be preferable to use a small excess, for instance up to 30% molar excess of the surfactant. Considerations determining the maximum amount of surfactant employed are discussed above. Where it is necessary to provide part of the glyphosate in the form of a salt of glyphosate with another agriculturally-acceptable cation, the solubilised glyphosate acid solution is then mixed with a solution of the glyphosate salt in the proportions to provide the required amounts of each component in the final concentrate. Concentrates of the invention where a cation other than the cationic form of the surfactant is present in sufficient amount alone to solubilise the glyphosate can be prepared by simply mixing the components at room temperature. The surfactants are normally viscous materials which slowly dissolve when stirred with an aqueous solution of the glyphosate salt. In general, the solutions employed throughout will be relatively concentrated or even substantially saturated, to minimise the amount of water in the concentrate. If necessary, however, some adjustment in this respect can be made after mixing, by evaporation or addition of water.

The present invention includes a herbicidal spray solution for spraying at conventional volume rates, and which contains the aqueous concentrate of the invention.

The concentration of glyphosate in the spray solution will typically be such that when sprayed at 100-400 litres per hectare, the application rate of glyphosate acid equivalent is from 0.125 to 1.5 kg per hectare.

A preferred method for preparing a herbicidal spray solution as described above is to mix a concentrate of the invention with water, but if desired, the individual components of the solution can be mixed in a spray tank with the required volume of water.

The concentrates and solutions of the invention may contain optional additional components. As indicated above, these include anti-freeze agents. Other examples are dyes, thickening agents, anti-foam agents, for instance silicone-based anti-foam agents. The concentrates and solutions of the invention may also be mixed with other water-soluble herbicides, for example but not limited to, salts of 2,4-dichlorophenoxyacetic acid or of 4-chloro-2-methylphenoxyacetic acid, or with finely-divided water-soluble herbicides, for example but not limited to, triazines or substituted ureas.

The invention is illustrated by the following examples.

Tables 1 to 3 show solutions of the invention where solubilisation of glyphosate acid relies at least in part on the presence of the cationic form of the surfactant. These solutions were prepared by first solubilising glyphosate acid (crystals containing 9% by weight of water) by stirring in water at room temperature or at a temperature not exceeding 60°C, with about 1.05 molar equivalents of ethoxylated amine surfactant per mole of glyphosate acid. When required, the solution thus obtained was then mixed with a solution of a mono salt (ammonium, isopropylamine or potassium) of glyphosate and, if required, water, to give solutions having concentrations and ratios of glyphosate acid equivalent: surfactant shown in the Tables below.

In the Tables, which show the percentages by weight of the various components, the surfactants are identified by the initial letter of the amine and by the average number of ethoxide groups. Thus C 2 indicates a surfactant derived from cocoamine and having an average of 2 ethoxide groups: 05 indicates a surfactant derived from oleylamine and having an average of 5 ethoxide groups; S 8 indicates a surfactant derived from stearylamine and having an average of 8 ethoxide groups; and T 10 indicates a surfactant derived from tallowamine and having an average of 10 ethoxide groups, etc. Glyphosate salts are identified as AM (ammonium), IP (isopropylammonium) or K (potassium).

The solutions of Table 1 contained approximately 300 g/l of glyphosate acid equivalent and 150 g/l of surfactant. The latter corresponds to 13.64% by weight of surfactant in the solution. The glyphosate salt was the monoisopropylamine salt.

**Table 1**

| Solution No. | 91% glyphosate acid (%) | Surfactant | Glyphosate salt (%) |
|---|---|---|---|
| 1 | 8.92 | C2 | 41.69 |
| 2 | 6.09 | C5 | 47.30 |
| 3 | 4.62 | C8 | 50.20 |
| 4 | 7.22 | 02 | 45.06 |
| 5 | 5.25 | 05 | 48.97 |
| 6 | 4.12 | 08 | 51.20 |
| 7 | 4.15 | S8 | 51.14 |
| 8 | 5.30 | T5 | 48.86 |
| 9 | 4.15 | T8 | 51.14 |
| 10 | 3.63 | T10 | 52.17 |
| 11 | 2.76 | T15 | 53.90 |

Table 3 gives the percent by weight of components in solutions where the glyphosate salt is the ammonium (AM) or potassium (K) salt. In all solutions the weight ratio of glyphosate acid equivalent to surfactant is 2:1

**Table 3**

| Solution No. | 91% Glyphosate acid (%) | Glyphosate salt | | Surfactant | |
|---|---|---|---|---|---|
| | | (%) | Code | (%) | Code |
| 19 | 8.92 | 67.04 | K | 13.64 | C2 |
| 20 | 8.92 | 60.23 | AM | 13.64 | C2 |
| 21 | 3.73 | 77.25 | K | 12.73 | C10 |
| 22 | 3.98 | 74.36 | AM | 13.64 | C10 |
| 23 | 7.32 | 72.13 | K | 13.64 | T2 |
| 24 | 7.32 | 64.81 | AM | 13.64 | T2 |
| 25 | 3.39 | 78.30 | K | 12.73 | T10 |
| 26 | 3.63 | 75.37 | AM | 13.64 | T10 |

Solutions 21 and 25 contained approximately 280 g/l and 140 g/l of glyphosate acid equivalent and surfactant respectively. In the other solutions, the corresponding figures are 300 g/l and 150 g/l.

Table 4 shows compositions of the invention which were prepared by stirring a 62% by weight aqueous solution of the mono-isopropylamine salt of glyphosate at room temperature with the required amount of surfactant.

**Table 4**

| Solution No. | Surfactant Code - g/l | Glyphosate (Acid Equivalent) g/l | Ammonium Sulphate g/l | Weight Ratio Glyphosate a.e. to surfactant |
|---|---|---|---|---|
| 27 | C 2 - 180 | 360 | - | 2 : 1 |
| 28 | C 2 - 200. | 400 | - | 2 : 1 |
| 31 | C 5 - 202 | 404 | - | 2 : 1 |
| 32 | C 10 - 204 | 407 | - | 2 : 1 |
| 33 | 0 8 - 203 | 405 | - | 2 : 1 |
| 34 | S 10 - 203 | 406 | - | 2 : 1 |
| 35 | T 5 - 201 | 402 | - | 2 : 1 |

In the drawings, Fig 1 shows results obtained in growth room tests on wheat. Figs 2, 3. 4, 10 and 11 show results obtained in growth room tests on blackgrass (Alopecurus myosuroides), and Figs 5 and 6 show results obtained in a field trial on wheat stubble. As volunteer wheat, wheat is a weed in its own right. Also, its response to glyphosate is typical of that of a range of weed grasses. Figs 7 and 8 show results obtained in a field trial in sown pasture containing perennial ryegrass (Lolium perenne) and white clover (Trifolium repens), and Fig 9 shows results obtained on the perennial grass weed couch (Elymus repens) in cereal stubble.

Growth room herbicidal evaluations were carried out using the following procedure. Plants were grown from seed in 13 cm pots containing a natural sandy loam soil. All irrigation was supplied automatically from below, mineral nutrients being added to the irrigation supply as required. The pots were placed in Conviron growth rooms with a 14 hour photoperiod, illuminance of 600 microeinsteins m⁻²s⁻¹ and a temperature regime of 15°C (day), 9°C (night). About two weeks before spraying, (2-4 weeks after sowing) plants were thinned by hand to leave a uniform stand.

At least one week before treatment, the plants were moved to a larger growth room with precise relative humidity as well as temperature control; the RH regime employed was 50% (day), and 65% or 75% (night). Plants remained in this room for the remainder of the experiment. Before spraying, pots were selected for uniformity as far as possible and atypical examples were discarded. Spray solutions were applied with a Mardrive precision laboratory sprayer, calibrated to deliver 200 l/ha spray solution in a single pass. All replicate pots (3-5 per species per treatment) were sprayed with one pass of the sprayer.

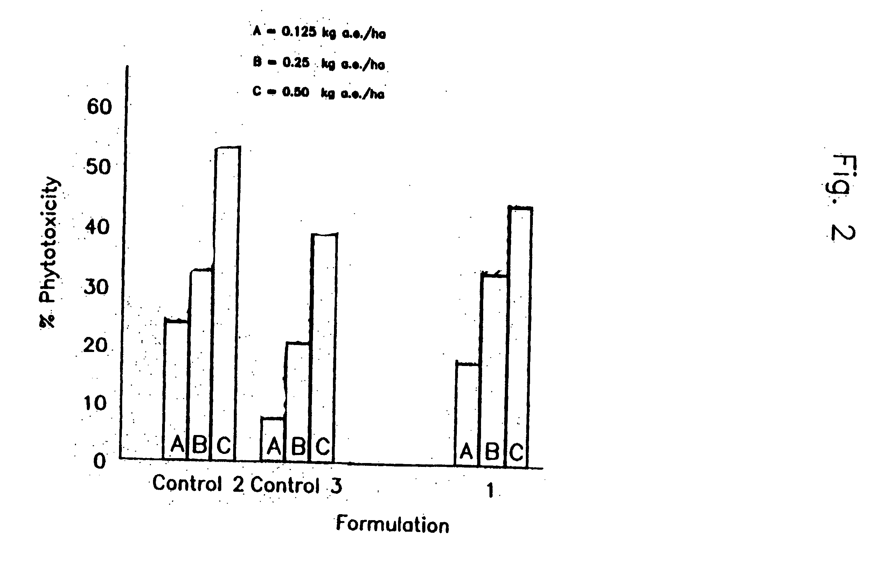

After treatment, untreated control pots were placed at random among treated pots. Assessment of "% Phytotoxicity" was made by comparison with untreated controls on an arbitrary scale from 0 to 100%, where 0 means no visible effect and 100% means complete death. For any one assessment, all pots were rated by the same individual, assessments being performed "blind", without knowledge of the treatment. The blocks in Figs 2, 3, 4, 10 and 11 show the averages of observations on the 3-5 replicates used.

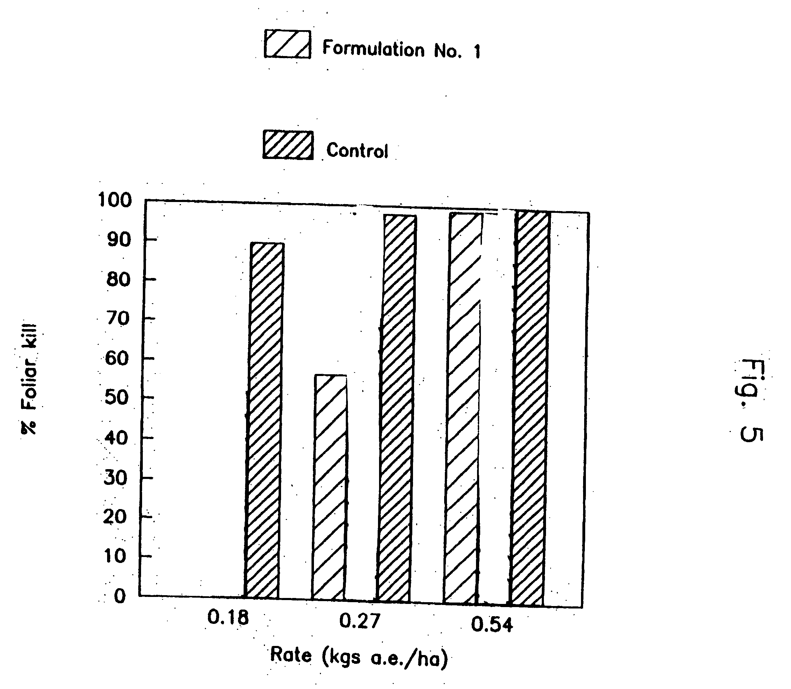

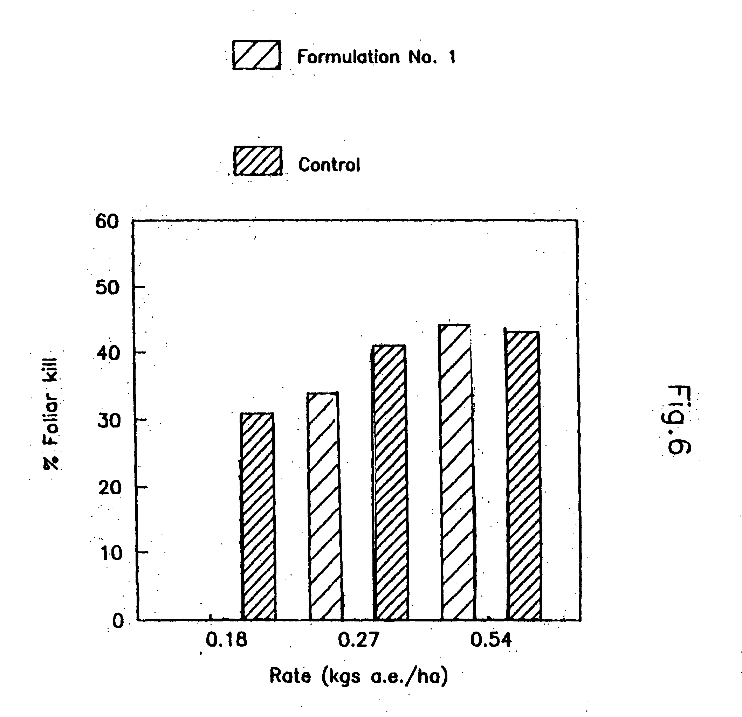

The trial which gave the results shown in Figs 5 and 6 was carried out in a field of wheat stubble which was 75% covered by weeds. About 35% of the weeds were volunteer wheat, and the remainder were a mixture of annual broadleaves, 35% chickweed (Stellaria media), 10% field pansy (Viola arvensis) and 10% Scarlet Pimpernel (Anagallis arvensis). The air temperature was 23°C, soil temperature 15°C, relative humidity 48%, with zero wind velocity. The test design was a randomised complete block with four replicates and a unit plot size of 18m². The observations recorded are % foliage kill three weeks after treatment.

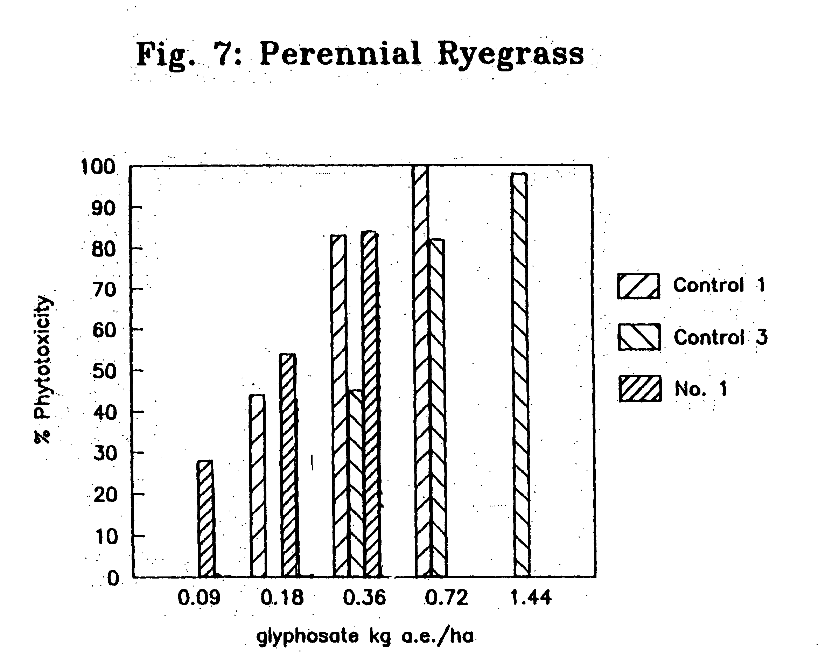

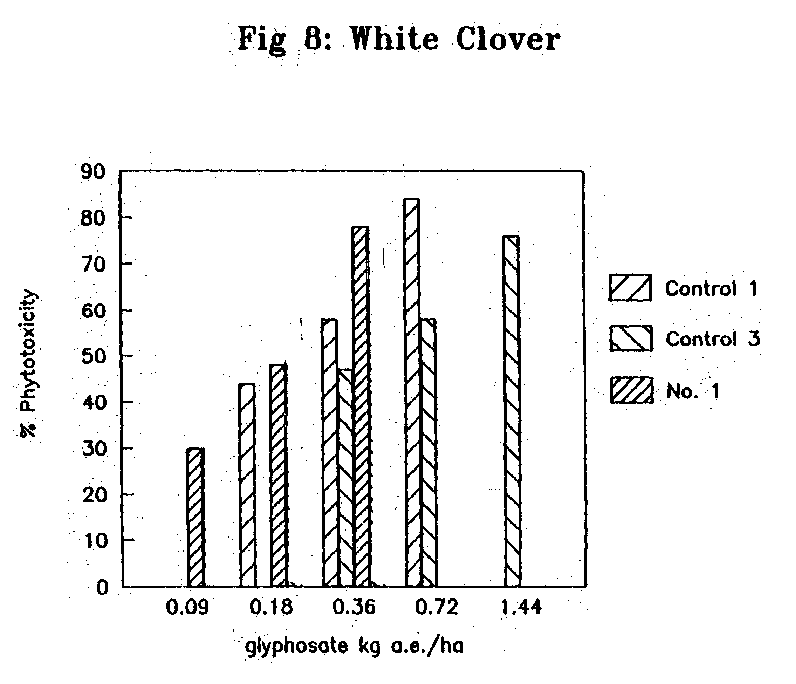

The trial which gave the results shown in Figs 7 and 8 was carried out in sown pasture containing in one part a pure stand of perennial ryegrass and in another part a mixture of various grasses and white clover. Data are shown for perennial ryegrass and white clover only. During spraying the air temperature was 18°C and there was a slight to moderate wind. No rain fell for 2 days after spraying. The test design was a randomised complete block with three replicates of each treatment and twelve replicates of untreated plots. Plot size was 16m² in the perennial ryegrass sward plus 16m² in the mixed grass and clover sward. The observations recorded are % foliage kill 47 days after treatment.

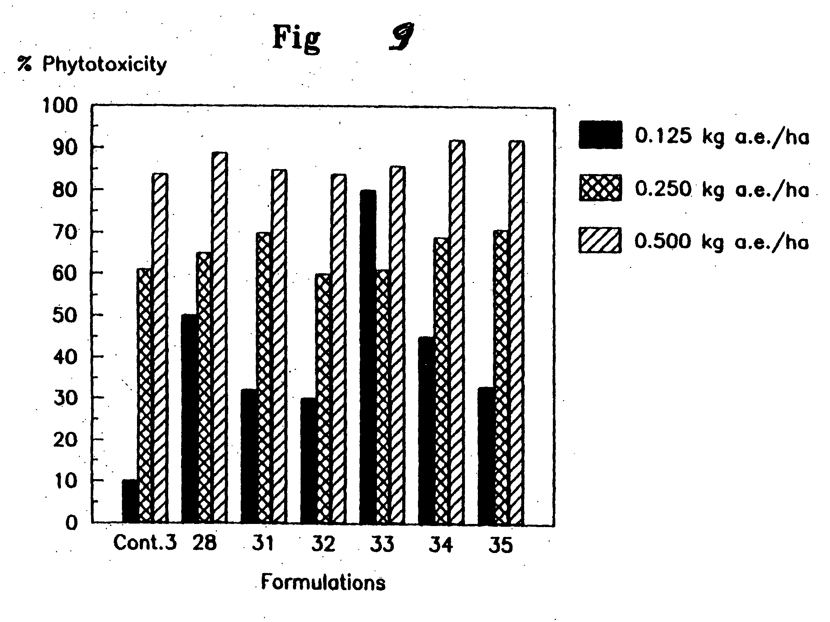

The trial which gave the results shown in Fig 9 was conducted in a field of cereal stubble carrying a moderate infestation of couch, fairly uniformly distributed over the trial area. During spraying the air temperature was 15. C and there was a light to moderate wind. No rain fell for 5 days after spraying. The test design was a randomised complete block with three replicates and a plot size of 30m². The observations recorded are % foliage kill 25 days after treatment.

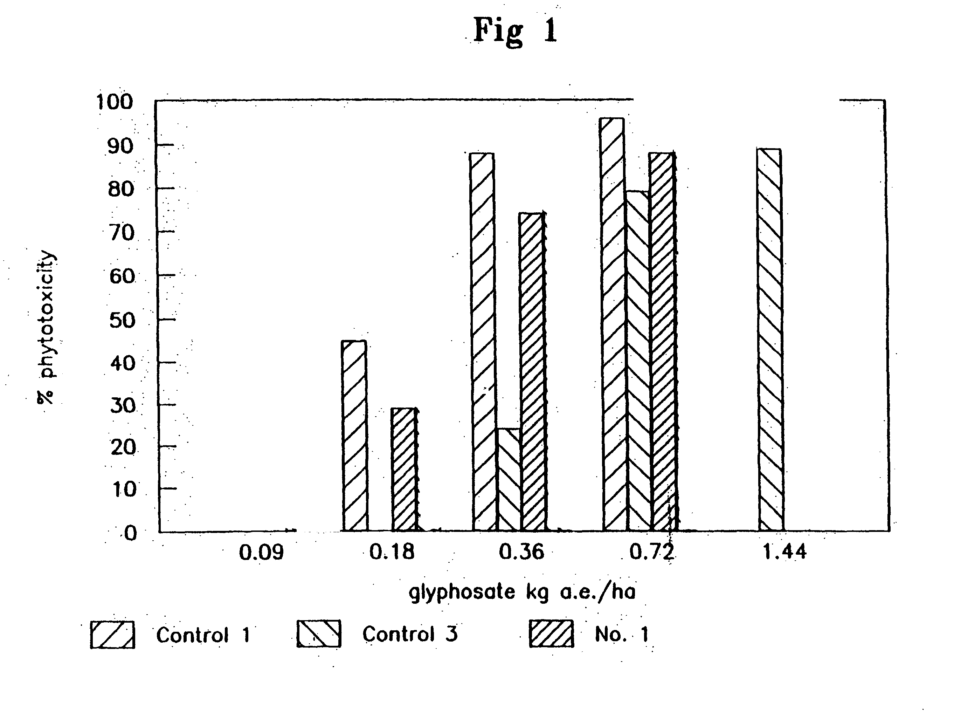

In preparing spray solutions, concentrates described in the Table above were diluted with water so that at a spray volume equivalent to 200 l/ha, application rates in kg glyphosate acid equivalent/ha were as indicated in Figs. 1-11.

The spray solutions used for comparative purposes (Controls) contained glyphosate wholly as the monoisopropylamine salt, and an ethoxylated tallow amine-based surfactant having an average of 15 ethoxide units. In Control 1, the weight ratio was 2.94 parts of surfactant to 1 part of glyphosate acid equivalent: in Control 2 it was 2 parts of surfactant to 1 part of glyphosate acid equivalent, and in Control 3 the weight ratio was 1 part of surfactant to 2 parts of glyphosate acid equivalent. These ratios are similar to those in existing commercial formulations of glyphosate.

In the Figures, spray solutions are designated as "Formulations" and numbered according to the number of the concentrate in the Tables above from which they are derived.
Fig 1 shows that on wheat, at-all rates of application, when compared with Control 3, which has the same glyphosate : surfactant ratio as Formulation No. 1 of the invention, Formulation No. 1 with no ammonium sulphate was as active at 0.18, 0.36 and 0.72 kg a.e./ha as Control 3 at twice these dosage rates, namely 0.36, 0.72 and 1.44 kg a.e./ha respectively.
Fig 2 shows the results obtained 14 days after treatment with spray solutions containing C 2 as the surfactant on blackgrass. Decrease in activity occurs as the proportion of surfactant is decreased, but the rate of the decrease is substantially less for solutions containing ammonium sulphate.

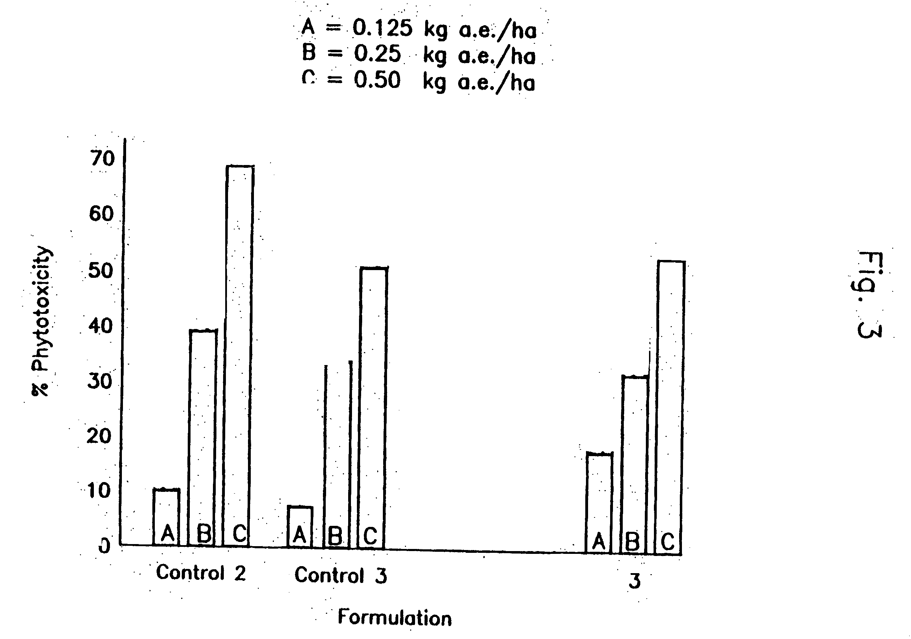

Fig 3 shows the results obtained 14 days after treatment with spray solutions containing C 8 as the surfactant on blackgrass. A more pronounced decrease in activity occurs as the proportion of surfactant is decreased than with surfactant C 2. At the lowest rate of application, Formulation 3 is significantly more active than Control 3 with the same surfactant to glyphosate ratio.

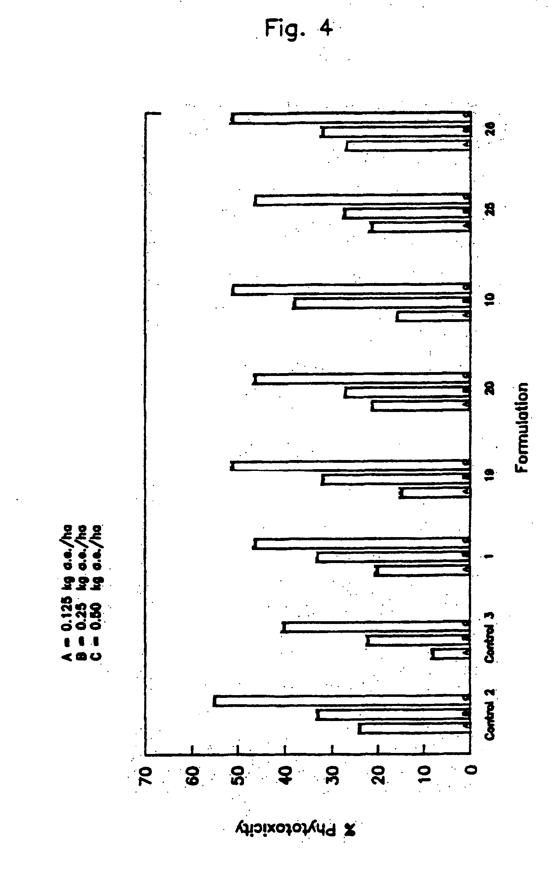

Fig 4 shows results obtained 14 days after treatment with formulations containing monoisopropylamine glyphosate (1 and 10), ammonium glyphosate (20 and 26) and potassium glyphosate (19 and 25). All the formulations have a glyphosate acid equivalent to surfactant weight ratio of 2:1, the same as Control 3. The generally enhanced herbicidal activity of the formulations relative to this control is clear.
   At 0.54 kg a.e./ha the performance of Formulation No. 1, was substantially the same as the control, despite a much lower surfactant : glyphosate acid equivalent ratio.
Fig 6 shows the herbicidal effect of glyphosate formulations on annual broadleaves. The formulation of the invention is equivalent to Control 1 at 0.54 kg a.e./ha despite the lower surfactant level.
Figs 7 and 8 show the herbicidal effect of Formulation No. 1 on perennial ryegrass and white clover. On both species the formulation of the invention was equal or superior in activity to Control 1, despite its much lower surfactant level, and showed activity equal or superior to that of Control 3 having the same surfactant level but applied at twice the dosage rate.
Fig 9 shows results obtained 22 days after treatment with spray solutions prepared by the dilution of concentrates containing various surfactants and glyphosate derived wholly from the isopropylamine salt. In all solutions, glyphosate and surfactant were present in the ratio 2:1. At the lowest rate of application, all solutions of the invention were more active than the control. At 0.25 kg glyphosate acid equivalent/ha, all solutions except those having C 10 or 0 8 as the surfactant were more active than the control.

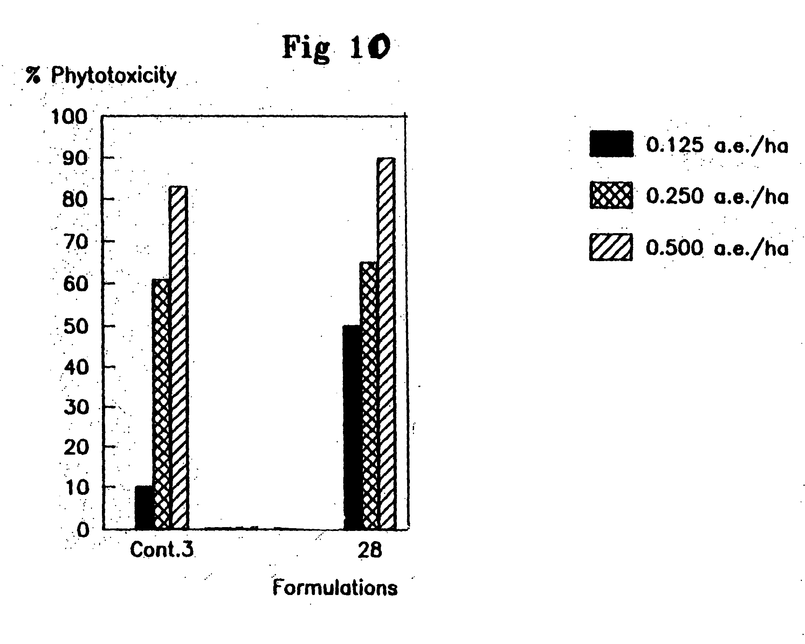

Fig 10 shows the results obtained 22 days after treatment using a spray solution containing C 2 as the surfactant. The glyphosate in these solutions is derived wholly from the monoisopropylamine salt.

## Claims

1. An aqueous solution consisting essentially of
(a) solubilised glyphosate in an amount equivalent to at least 40 grams per litre of glyphosate acid,
(b) a surfactant which is a mixture of amines having the formula 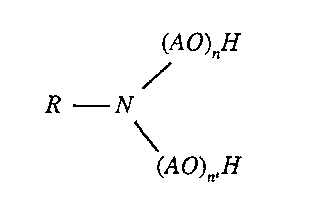
where A represents an alkylene group, n and n' being integers such that in individual amines n + n' has a value from 0 to 15, but in the mixture the average of the sum n + n' is from 2 to 10, R represents a straight- or branched-chain alkyl or alkenyl group, having a single value or an average value, of from 10 to 20 carbon atoms
and wherein the weight ratio of the solubilised glyphosate (a) (expressed as glyphosate acid equivalent) to the surfactant (b) is from 1.5:1 to 3:1,
with the proviso that the solution contains no significant amount of inorganic ammonium salt and no additional secondary surfactants.

2. The composition in accordance with Claim 1 wherein A represents an ethylene group.

3. The composition in accordance with Claim 1 wherein the surfactant is an ethoxylated derivative of cocoamine, tallowamine or of oleylamine where n + n' has an average value of 2, 5 or 8.

4. The composition in accordance with any one of Claims 1 through 3 wherein the glyphosate is present (i) partly as glyphosate acid solubilised by means of the surfactant (b) and partly as a salt of glyphosate and partly with an agriculturally-acceptable cation other than the cation form of the surfactant.

5. The composition in accordance with Claim 4 wherein the salt of glyphosate is the isopropylamine salt.

6. A compostion in accordance to Claim 5 consisting essentially of an aqueous solution of components (a) and (b) containing from 150 to 450 grams per liter of component (a).

## Patentansprüche

1. Wässrige Lösung, bestehend im wesentlichen aus
(a) löslich gemachtem Glyphosat in einer Menge entsprechend mindestens 40 g/l Glyphosatsäure,
(b) einem oberflächenaktiven Mittel, welches eine Mischung von Aminen der Formel 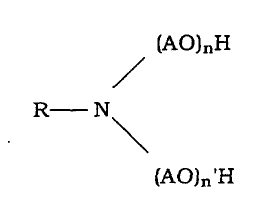 ist, worin A eine Alkylengruppe bedeutet, n und n' ganze Zahlen sind, so dass in den einzelnen Aminen n + n' einen Wert von 0 bis 15 hat, jedoch in der Mischung der Durchschnittswert der Summe aus n + n' 2 bis 10 ist, R eine gerad- oder verzweigtkettige Alkyl- oder Alkenylgruppe mit einem einzigen Wert oder einem Durchschnittswert von 10 bis 20 Kohlenstoffatomen bedeutet,
und wobei das Gewichtsverhältnis des löslich gemachten Glyphosats (a) (angegeben als Glyphosatsäure-Äquivalent) zu dem oberflächenaktiven Mittel (b) 1,5:1 bis 3:1 beträgt.

2. Zusammensetzung nach Anspruch 1, wobei A eine Ethylengruppe bedeutet.

3. Zusammensetzung nach Anspruch 1, wobei das oberflächenaktive Mittel ein ethoxyliertes Derivat von Cocosamin, Talgamin oder von Oleylamin ist, wobei n + n' einen Durchschnittswert von 2, 5 oder 8 hat.

4. Zusammensetzung nach mindestens einem der Ansprüche 1 bis 3, wobei das Glyphosat (i) teilweise als Glyphosatsäure, welche mittels dem oberflächenaktiven Mittel (b) löslich gemacht worden ist, und teilweise als ein Salz von Glyphosat und teilweise mit einem landwirtschaftlich annehmbaren Kation, welches von der Kationenform des oberflächenaktiven Mittels verschieden ist, vorliegt.

5. Zusammensetzung nach Anspruch 4, wobei das Salz von Glyphosat das Isopropylaminsalz ist.

6. Zusammensetzung nach Anspruch 5, bestehend im wesentlichen aus einer wässrigen Lösung der Komponenten (a) und (b), wobei die Komponente (a) in eine Menge von 150 bis 450 g/l enthalten ist.

## Revendications

1. Solution aqueuse, qui est essentiellement constituée :
(a) de glyphosate solubilisé, en une quantité équivalant à au moins 40 grammes par litre de glyphosate sous forme acide,
(b) et d'un tensioactif qui est un mélange d'amines de formule : 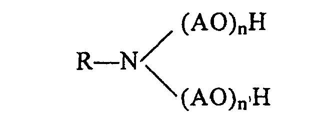
dans laquelle A représente un groupe alkylène, n et n' représentent des nombres entiers tels que, dans chaque amine prise individuellement, la somme n + n' vaille de 0 à 15, mais dans le mélange, la moyenne de cette somme n + n' vaille de 2 à 10, et R représente un groupe alkyle ou alcényle à chaîne droite ou ramifiée comportant de 10 à 20 atomes de carbone, en valeur unique ou moyenne,
et dans laquelle le rapport en poids du glyphosate solubilisé (a) (exprimé en équivalent de glyphosate sous forme acide) au tensioactif (b) vaut de 1,5/1 à 3/1,
sous réserve que la solution ne contienne ni une quantité significative de sel inorganique d'ammonium, ni des tensioactifs secondaires supplémentaires.

2. Composition selon la revendication 1, dans laquelle A représente un groupe éthylène.

3. Composition selon la revendication 1, dans laquelle le tensioactif est un dérivé éthoxylé d'amine de coco, d'amine de suif ou d'oléylamine, dans lequel la somme n + n' vaut en moyenne 2, 5 ou 8.

4. Composition selon l'une quelconque des revendications 1 à 3, dans laquelle le glyphosate est présent en partie sous forme de glyphosate sous forme acide, solubilisé par le tensio-actif (b), et en partie sous forme d'un sel de glyphosate comportant un cation acceptable en agriculture, autre que la forme cationique du tensioactif.

5. Composition selon la revendication 4, dans laquelle le sel de glyphosate est le sel d'isopropylamine.

6. Composition selon la revendication 5, essentiellement constituée d'une solution aqueuse des constituants (a) et (b), et renfermant de 150 à 450 grammes par litre de constituant (a).
